(19) Europäisches Patentamt
European Patent Office
Office européen des brevets

(11) Veröffentlichungsnummer : **0 281 979 B1**

(12) # EUROPÄISCHE PATENTSCHRIFT

(45) Veröffentlichungstag der Patentschrift : **28.08.91 Patentblatt 91/35**

(51) Int. Cl.[5] : **C07F 9/34**, C07F 9/42

(21) Anmeldenummer : **88103459.9**

(22) Anmeldetag : **05.03.88**

(54) **Cyanomethansäurehalogenide des Phosphors, Verfahren zu ihrer Herstellung und die Vorprodukte Cyanomethyl-methylphosphinsäurealkylester.**

(30) Priorität : **10.03.87 DE 3707639**

(43) Veröffentlichungstag der Anmeldung : **14.09.88 Patentblatt 88/37**

(45) Bekanntmachung des Hinweises auf die Patenterteilung : **28.08.91 Patentblatt 91/35**

(84) Benannte Vertragsstaaten : **BE CH DE FR GB IT LI NL**

(56) Entgegenhaltungen :
**EP-A- 0 074 582**
**EP-A- 0 138 403**
**DE-B- 2 259 241**

(73) Patentinhaber : **HOECHST AKTIENGESELLSCHAFT**
**Postfach 80 03 20**
**W-6230 Frankfurt am Main 80 (DE)**

(72) Erfinder : **Kleiner, Hans-Jerg, Dr.**
**Altkönigstrasse 11a**
**W-6242 Kronberg/Taunus (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 281 979 B1

Jouve, 18, rue Saint-Denis, 75001 PARIS

## Beschreibung

Die Erfindung betrifft Cyanomethansäurehalogenide des Phosphors, Verfahren zu ihrer Herstellung und das Vorprodukt Cyanomethyl-methylphosphinsäureäthylester Sie bezieht sich insbesondere auf Cyanomethanphosphonsäuredichlorid und Alkyl-cyanomethylphosphinsäurechloride.

Bisher gelang es nicht, Cyanomethanphosphonsäuredichlorid herzustellen. Die oxydative Chlorphosphorylierung von Acetonitril führte nur zur Bildung von Phosphoroxychlorid. In geringen Mengen wurde eine höhersiedende Substanz vom Siedepunkt etwa 70°C/0,4 kPa erhalten, die sich während der Destillation unter Bildung von Phosphoroxychlorid und Acetonitril zersetzte (R.J. Bystrova et al, Zh. Obsch. Khim 29, 2057 (1959) engl.).

Gegenstand der Erfindung sind Verbindungen der allgemeinen Formel I (s. Patentanspruch 1), worin $R^1$ Hal oder $C_1$-$C_3$-Alkyl bedeutet, bevorzugt aber Methyl ist, und Hal ein Halogen mit einem Atomgewicht von 35 bis 80 ist. Hierbei sind das Cyanomethanphosphonsäuredichlorid und das Cyanomethyl-methylphosphinsäurechlorid bevorzugt. Diese Verbindungen sind im Gegensatz zu den bekannten Produkten gemäß den Angaben in der vorgenannten Literaturstelle selbst bei Temperaturen von 100°C oder mehr stabil.

Die genannten Cyanomethanhalogenide lassen sich in guten Ausbeuten aus den entsprechenden Cyanomethanestern der allgemeinen Formel II (s. Patentanspruch 6), worin $R^2$ $C_1$-$C_3$-Alkyl oder $OR^3$ und $R^3$ $C_1$-$C_8$-Alkyl, bevorzugt $C_1$-$C_3$-Alkyl darstellt, durch Umsetzung mit Säurehalogeniden der allgemeinen Formel $MHal_2$ (III) herstellen, worin M SO, CO oder $PHal_3$ und Hal Brom oder vorzugsweise Chlor ist. Wenn bei dieser Umsetzung Phosgen oder die entsprechende Bromverbindung als Säurehalogenid (M = CO) verwendet wird, so ist die Verwendung von Katalysatoren erforderlich, wie sie für die Phosgenierung von Phosphonsäurediestern üblich sind. Auch bei der Umsetzung von Thionylhalogenid können solche Katalysatoren verwendet werden. Geeignet sind z.B.

A. tertiäre aliphatische und aromatische Amine und Phosphine wie Trimethylamin, Triäthylamin, die verschiedenen Tripropyl- und Tributylamine, Triphenylamin, Trimethylphosphin, Triäthylphosphin, die verschiedenen Tripropyl- und Tributylphosphine und/oder

B. quartäre Ammoniumsalze bzw. Phosphoniumsalze wie Tetramethylammoniumchlorid oder -bromid und/oder

C. heterocyclische Verbindungen mit aromatischem Charakter wie Pyridin und 4-(Dimethylamino)-pyridin und/oder

D. sonstige Stickstoff- oder Phosphorverbindungen mit einer höheren Wertigkeit eines N- oder P-Atoms als 3, wie Pyridin-N-oxyd, Trimethylphosphinoxid, Tributylphosphinoxid, Trihexylphosphinoxid, Triphenylphosphinoxid.

Alle Katalysatoren werden in Mengen von mindestens 0,01 Gewichtsprozent, z.B. bis 5 Gew.-% oder mehr eingesetzt, bezogen auf die Verbindung II. Bevorzugt sind Mengen von 0,5 bis 2 Gewichtsprozent. Sie lassen sich als solche, gegebenenfalls in Form ihrer Salze, vor allem der Hydrochloride, einsetzen. Als Reaktionsmedium sind solche Lösungsmittel geeignet, die unter den Reaktionsbedingungen gegenüber den Reaktionsteilnehmern inert sind, wie Dichlormethan, Toluol und chlorierte aromatische Kohlenwasserstoffe wie Chlorbenzol. Vorzugsweise wird aber ohne Verwendung eines Lösungsmittels gearbeitet.

Die bei dem Verfahren verwendeten Temperaturen sind abhängig von der Natur des verwendeten Säurechlorids. Wird Phosphorpentahalogenid eingesetzt, z.B. das Pentachlorid, wird im allgemeinen bei – 10 bis +100°C, vorzugsweise bei 20-80°C, gearbeitet. Wenn Thionylchlorid oder Phosgen eingesetzt werden, wird im allgemeinen bei 70-150°C, vorzugsweise bei 80-110°C gearbeitet.

Die Reaktion kann auch unter höherem Druck als Atmosphärendruck durchgeführt werden. Dies kommt vor allem bei Verwendung von Phosgen und Thionylchlorid in Betracht. Grundsätzlich ist jedoch das Arbeiten bei Atmosphärendruck bevorzugt. Die Umsetzung wird zweckmäßig derart durchgeführt, daß zu dem Phosphonsäure- bzw. Phosphinsäureester das Säurehalogenid, gegebenenfalls in Gegenwart eines Katalysators, portionsweise oder kontinuierlich dosiert wird. Mitunter ist es zweckmäßig, den Katalysator oder weitere Mengen davon erst in einer späteren Phase der Umsetzung, wenn die Reaktion abklingt, zuzusetzen.

Eine lebhafte Durchmischung ist vorteilhaft, insbesondere bei Verwendung des gasförmigen Phosgens. Nach Beendigung der Umsetzung wird das Reaktionsprodukt, z.B. durch Destillation isoliert.

Als Alkylgruppen von 1 bis 3 C-Atomen eignen sich sowohl Methyl als auch Äthyl, Propyl und Isopropyl ; jedoch ist Methyl bevorzugt. Als Alkylgruppen mit 4 bis 8 C-Atomen kommen die verschiedenen Butyl-, Pentyl-, Hexyl-, Heptyl- und Octylgruppen, z.B. der n-, sek-, tert.- oder Isobutylrest oder der 2-Äthylhexylrest in Betracht.

Die meisten Ausgangsstoffe sind bekannt ; einige, wie die Cyanomethyl-methylphosphinsäurealkylester, worin der Alkylrest 1 bis 6 C-Atome enthält, z.B. der Äthylester gemäß Beispiel 2, sind neu. Der Alkylrest ist z.B. der Methyl-, Äthyl-, einer der verschiedenen Propyl-, Butyl-, Pentyl- und Hexylreste. Bevorzugt sind Reste mit 2 bis 4 C-Atomen und insbesondere der Äthylrest. Die zum Äthylester homologen Ester können in einer

Weise analog zum Beispiel 2 aus den homologen Methanphosphonigsäuredialkylestern hergestellt werden. Diese Verbindungen sind ebenfalls Gegenstand der Erfindung.

Die nach dem erfindungsgemäßen Verfahren hergestellten Säurehalogenide sind wertvolle Zwischenprodukte, z.B. zur Herstellung von Aminocarbonylmethanphosphonsäure und Alkyl-aminocarbonylmethylphosphinsäuren, deren Herstellung in der gleichzeitig eingereichten Patentanmeldung EP-A-281980 beschrieben ist.

Beispiele

1. — Cyanomethanphosphonsäuredichlorid

480 g (2,71 Mol) Cyanomethanphosphonsäurediäthylester wurden mit 3,6 g Triphenylphosphin vermischt und auf 85°C erhitzt. Während 14 Stunden wurde unter lebhaftem Rühren Phosgen eingeleitet. Anschließend wurde das überschüssige Phosgen unter vermindertem Druck entfernt. Dann wurde bei 0,067 kPa destilliert. Bei einer Übergangstemperatur von 94-97°C wurden 390 g Cyanomethanphosphonsäuredichlorid erhalten. Das entspricht einer Ausbeute von 91% d.Th.

$C_2H_2Cl_2NOP$ (158)

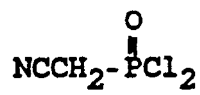

ber.: 15,19% C 1,27% H 44,94% Cl 8,86% N 19,62% P
gef.: 15,5% C 1,2% H 43,6% Cl 8,8% N 19,1% P

2. — Cyanomethyl-methylphosphinsäurechlorid

a) Cyanomethyl-methylphosphinsäureäthylester

226,5 g (3 Mol) Chloracetonitril wurden auf 60°C erwärmt. Nun wurden 470 g (3,53 Mol) Methanphosphonigsäurediäthylester wahrend 3 Stunden bei 70-80°C eingetropft. Dabei war es nicht erforderlich zu heizen ; die Reaktion war exotherm. In einer nachgeschalteten Kühlfalle sammelte sich Äthylchlorid. Nach Beendigung des Eintropfens wurde langsam auf 125°C geheizt und das Gemisch bei dieser Temperatur gelassen, bis kein Abgas (Äthylchlorid) mehr zu erkennen war. Anschließend wurde gekühlt und im Vakuum der Wasserstrahlpumpe über eine Kolonne destilliert. Als Hauptlauf wurden 418 g Cyanomethyl-methylphosphinsäureäthylester (Sdp. 108-109°C, 0,0133 kPa) erhalten. Das entspricht einer Ausbeute von 95% d.Th., bezogen auf eingesetztes Chloracetonitril.

$C_5H_{10}NO_2P$ (147)

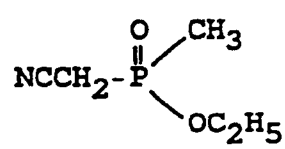

b) Erfindungsgemäße Umsetzung

In 200 g (1,36 Mol) Cyanomethyl-methylphosphinsäureäthylester wurde bei 100°C unter lebhaftem Rühren während 4 Stunden Phosgen eingeleitet. Dann wurde 1 g 4-(Dimethylamino)-pyridin zugegeben. Während weiterer 3 Stunden wurde wieder Phosgen eingeleitet. Dann wurde im Vakuum der Wasserstrahlpumpe das überschüssige Phosgen entfernt. Das anfallende Reaktionsgut wurde bei 0,067 kPa über einen Dünnschichtverdampfer bei einer Badtemperatur von 140°C destilliert. Dabei erhielt man 160 g Cyanomethyl-methylphosphinsäurechlorid. Das entspricht einer Ausbeute von ca. 85% d.Th. Das Produkt konnte nun in einer normalen Vakuumdestillation destilliert werden (Sdp. 117-123°C, 0,053 kPa).

$C_3H_5ClNOP$ (137,5) 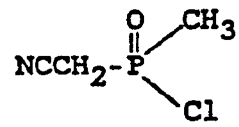

ber.: 26,18% C 3,64% H 25,82% Cl 10,18% N 22,55% P
gef.: 26,3% C 3,6% H 25,5% Cl 9,7% N 21,1% P

3. — Cyanomethyl-methylphosphinsäurechlorid

In 220,5 g (1,5 Mol) Cyanomethyl-methylphosphinsäureäthylester wurden portionsweise unter Rühren und Kühlen bei 20-25°C 313 g (1,5 Mol) Phosphorpentachlorid eingetragen. Dann wurde nachgerührt und anschließend zum Rückfluß erhitzt, bis kein Abgas mehr zu erkennen war. Dann wurde im Wasserstrahlvakuum das im Reaktionsgut vorhandene Phosphoroxychlorid abdestilliert. Der Rückstand wurde bei 0,067 kPa über einen Dünnschichtverdampfer bei einer Badtemperatur von 140°C destilliert. Dabei erhielt man 153 g Cyanomethyl-methylphosphinsäurechlorid. Das entspricht einer Ausbeute von 74% d.Th.

## Patentansprüche

1. Verbindungen der allgemeinen Formel I

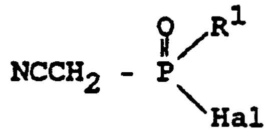
I

worin $R^1$ Hal oder $C_1$-$C_3$-Alkyl und Hal ein Halogen mit einem Atomgewicht von 35 bis 80 bedeutet.

2. Verbindungen nach Anspruch 1, dadurch gekennzeichnet, daß Hal Chlor bedeutet.

3. Verbindungen nach Anspruch 1 oder 2, dadurch gekennzeichnet, daß $R^1$ Methyl ist.

4. Verbindung nach Anspruch 2 in Form von Cyanomethanphosphonsäuredichlorid.

5. Verbindung nach Anspruch 3 in Form von Cyanomethyl-methylphosphinsäurechlorid.

6. Verfahren zur Herstellung von Verbindungen gemäß einem oder mehreren der Ansprüche 1 bis 5, dadurch gekennzeichnet, daß man eine Verbindung der allgemeinen Formel II

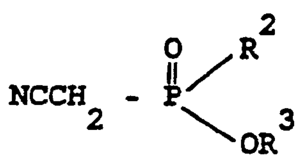
II

worin $R^2$ $C_1$-$C_3$-Alkyl oder $OR^3$ bedeutet und $R^3$ $C_1$-$C_8$-Alkyl, vorzugsweise $C_1$-$C_3$-Alkyl darstellt, mit einem Säurehalogenid der Formel $MHal_2$ (III) umsetzt, worin M SO, CO oder $PHal_3$ und Hal ein Halogen mit einem Atomgewicht von 35 bis 80 ist und wobei die Reaktion, falls M CO ist, in Gegenwart eines für die Phosgenierung von Phosphonsäurediestern üblichen Katalysators durchgeführt wird.

7. Verfahren nach Anspruch 6, dadurch gekennzeichnet, daß M CO oder SO ist und ein Katalysator in einer Menge von mindestens 0,01 und im allgemeinen bis 5, vorzugsweise von 0,5 bis 2 Gew.-% eingesetzt wird, bezogen auf die Verbindung II.

8. Verfahren nach Anspruch 6 oder 7, dadurch gekennzeichnet, daß bei der Umsetzung von Phosgen oder Thionylchlorid bei einer Temperatur von 70 bis 150, vorzugsweise von 80 bis 110°C gearbeitet wird.

9. Verfahren nach Anspruch 6, dadurch gekennzeichnet, daß bei der Umsetzung von Phosphorpentahalogenid bei einer Temperatur von – 10 bis + 100, vorzugsweise von 20 bis 80°C gearbeitet wird.

10. Cyanomethyl-methylphosphinsäurealkylester, worin der Alkylrest 1 bis 6, vorzugsweise 2 bis 4 C-Atome enthält und insbesondere der Äthylrest ist.

## Claims

1. A compound of the general formula I

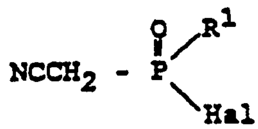

I

in which $R^1$ is Hal or $C_1$-$C_3$-alkyl and Hal is a halogen having an atomic weight from 35 to 80.

2. A compound as claimed in claim 1, wherein Hal is chlorine.

3. A compound as claimed in claim 1 or 2, wherein $R^1$ is methyl.

4. A compound as claimed in claim 2 in the form of cyanomethanephosphonyl dichloride.

5. A compound as claimed in claim 3 in the form of cyanomethylmethylphosphinyl chloride.

6. A process for the preparation of a compound as claimed in one or more of claims 1 to 5, which comprises reacting a compound of the formula II

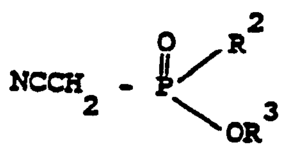

II

in which $R^2$ is $C_1$-$C_3$-alkyl or $OR^3$ and $R^3$ is $C_1$-$C_8$-alkyl, preferably $C_1$-$C_3$-alkyl, with an acid halide of the formula $MHal_2$ (III), in which M is SO, CO or $PHal_3$ and Hal is a halogen having an atomic weight from 35 to 80 and in which the reaction, if M is CO, is carried out in the presence of a catalyst customary for the phosgenation of phosphonic diesters.

7. The process as claimed in claim 6, wherein M is CO or SO and a catalyst is used in an amount of at least 0.01 and in general up to 5, preferably 0.5 to 2% by weight, relative to compound II.

8. The process as claimed in claim 6 or 7, wherein the reaction of phosgene or thionyl chloride is carried out at a temperature of 70 to 150, preferably 80 to 110°C.

9. The process as claimed in claim 6, wherein the reaction of phosphorus pentahalide is carried out at a temperature of – 10 to + 100, preferably 20 to 80°C.

10. Alkyl cyanomethylmethylphosphinates in which the alkyl radical contains 1 to 6, preferably 2 to 4, carbon atoms and is in particular an ethyl radical.

## Revendications

1. Composés répondant à la formule I :

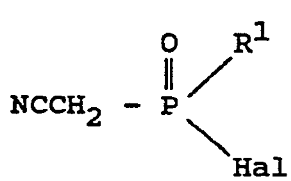

I

dans laquelle $R^1$ représente Hal ou un alkyle en $C_1$-$C_3$ et Hal représente un halogène ayant une masse atomique de 35 à 80.

2. Composés selon la revendication 1 caractérisés en ce que Hal représente le chlore.

3. Composés selon l'une des revendications 1 et 2, caractérisés en ce que $R^1$ représente un radical méthyle.

4. Composé selon la revendication 2 sous la forme du dichlorure de l'acide cyanométhane-phosphonique.

5. Composé selon la revendication 3 sous la forme du chlorure de l'acide cyanométhyl-méthyl-phosphinique.

6. Procédé pour préparer des composés selon l'une quelconque des revendications 1 à 5, caractérisé en

ce qu'on fait réagir un composé répondant à la formule générale II :

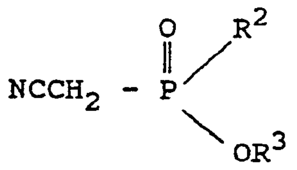

II

dans laquelle $R^2$ représente un alkyle en $C_1$-$C_3$ ou $OR^3$ et $R^3$ représente un alkyle en $C_1$-$C_8$, de préférence en $C_1$-$C_3$, avec un halogénure d'acide répondant à la formule III : $MHal_2$ III dans laquelle M représente SO, CO ou $PHal_3$ et Hal représente un halogène ayant une masse atomique de 35 à 80, la réaction étant effectuée, dans le cas où M représente CO, en présence d'un catalyseur usuel pour la phosgénation de diesters d'acides phosphoniques.

7. Procédé selon la revendication 6 caractérisé en ce que M représente CO ou SO en ce qu'on utilise un catalyseur en une quantité d'au moins 0,01% et généralement d'au plus 5%, de préférence de 0, 5 à 2%, en poids par rapport au composé II.

8. Procédé selon l'une des revendications 6 et 7, caractérisé en ce qu'on opère, lors de la réaction du phosgène ou du chlorure de thionyle, à une température de 70 à 150°C, de préférence de 80 à 110°C.

9. Procédé selon la revendication 6 caractérisé en ce que, lors de la réaction d'un pentahalogénure de phosphore, on opère à une température de – 0 à +100°C, de préférence de 20 à 80°C.

10. Cyanométhyl-méthyl-phosphinates d'alkyles dans lesquels l'alkyle contient de 1 à 6 atomes de carbone, de préférence de 2 à 4, et est plus particulièrement le radical éthyle.